# EUROPÄISCHE PATENTSCHRIFT

(11) **EP 0 888 260 B1**
(45) Veröffentlichungstag und Bekanntmachung des Hinweises auf die Patenterteilung: **03.12.2003**
(21) Anmeldenummer: 98904056.3
(22) Anmeldetag: 13.01.1998
(51) Int. Cl.: C04B 41/87, C04B 33/14, C04B 111/82

(54) **VERFAHREN ZUM FÄRBEN VON KERAMIKOBERFLÄCHEN**
METHOD FOR DYING CERAMIC SURFACES
PROCEDE DE COLORATION DE SURFACES CERAMIQUES

(30) Priorität: 15.01.1997 DE 19701080
(43) Veröffentlichungstag der Anmeldung: 07.01.1999
(73) Patentinhaber: BK Giulini Chemie GmbH & Co. OHG, 67065 Ludwigshafen (DE)
(72) Erfinder: KLEIN, Thomas, D-69121 Heidelberg (DE); STAFFEL, Thomas, D-67269 Grünstadt (DE); STRAUB, Jürgen, D-68305 Mannheim (DE); FISCHER, Lysander, D-69231 Rauenberg (DE)
(86) Internationale Anmeldenummer: EP9800136
(87) Internationale Veröffentlichungsnummer: WO98031647

(56) Entgegenhaltungen:
- WO-A-97/38952
- DE-A- 2 605 651
- DE-A- 3 109 927

## Beschreibung

Gegenstand der vorliegenden Erfindung ist ein neues Verfahren zum nachträglichen Einfärben von keramischen Körpern durch Einbau von chromophoren Metallionen in ein in keramischem Körper enthaltenes Wirtsgitter.

Zur Farbgebung keramischer Werkstoffe kommen nur feuerfeste Pigmente in Frage, da Farbglasuren bei Temperaturen von 700 bis 1100 °C und Sanitärkeramik bei 1400 °C eingebrannt werden. Als Pigmente verwendet werden insbesondere farbige Oxide des Eisens, Chroms, Mangans, Rein- und Mischphasen mit Spinellstruktur, beispielsweise Verbindungen von Al, Ni, Cr, Zn, Co, Cu, Mn, Fe, U und V, eine Reihe von Silikaten, Sulfiden und Mischphasen mit farbgebenden Kationen in farblosen Wirtsgittern vom Rutil Typ wie TiO₂, SnO₂, ZrO₂, ZrSiO₄ und PbO₂. Durch die Wahl der Ausgangsstoffe, ihre Konzentration in Mischphasen und die Herstellungsbedingungen lassen sich dabei praktisch alle gängigen Farben als feuerfeste Pigmente herstellen. Die wegen ihrer Brillanz besonders geschätzten oxidischen Mischphasenpigmente bestehen aus einem stabilen farblosen Oxidgitter, üblicherweise vom Spinelltyp (Me²⁺Me₂³⁺O₄ oder Me₂²⁺Me⁴⁺O₄ als Grundformel) oder Rutiltyp, wie TiO₂, SnO₂, ZrO₂, ZrSiO₄, PbO₂, in die farbgebende Kationen anderer Metalle eingebaut sind, welche die Farbe bewirken. Kristallchemisch handelt es sich um Mischkristalle. Die in diesem Zusammenhang besonders interessierenden Mischoxide vom Rutiltyp enthalten in der Regel Nickel, Cobalt,'Chrom, Kupfer, Mangan, Eisen oder Vanadium als farbgebendes Kation und zum Wertigkeitsausgleich dieser zwei- oder dreiwertigen Ionen gegenüber dem zu ersetzenden vierwertigen Rutil-Ion, Antimon, Niob oder Wolfram als höherwertige Metallionen. Diese oxidischen Mischphasenpigmente werden prinzipiell durch Brennen der entsprechenden oxidischen Komponenten in festem Zustand bei Temperaturen im Bereich zwischen 800 und 1400 °C hergestellt, wobei die Festkörperreaktionen um so leichter ablaufen, je reaktivere Komponenten verwendet werden, d.h. je feiner sie verteilt und je inniger sie gemischt werden. Um eine besonders gute Vermischung zu erreichen, werden häufig die Ausgangskomponenten durch gemeinsames Ausfällen von Hydroxiden oder Carbonaten aus wässrigen Lösungen hergestellt. Durch Zusatz von Mineralisatoren (z. B. Lithium- oder Natriumchlorid ) lässt sich die Bildungstemperatur der oxidischen Mischphasenpigmente herabsetzen und dadurch die ansonsten bei hohen Temperaturen leicht eintretende starke Versinterung unter Bildung großer Pigmente vermeiden (vgl. Ullmanns Enzyclopedie d. technischen. Chemie, 4. Aufl. (1979), Bd. 18, S. 599 - 628; DE-AS 19 03 755; US-P 3,022,186; Zeitschrift " Angewandte Chemie " 1/1962, S. 23 - 27 und cfi/Ber. DKG 4/1993, S. 146 - 148. Für die besonders interessierenden gelben Pigmente mit Ni und Cr als färbenden lonen sei auf DE-OS-24 16 347, DE-OS-26 05 651 und US-P-2 992 123 verwiesen.

Zur Färbung von Keramik werden diese Pigmente entweder zusammen mit glasbildenden Substanzen, der sogenannten Fritte, auf die vorgebrannte Keramik aufgetragen und mit dieser verschmolzen oder versintert (Glasur oder Emaille), oder je nach mechanischer Beanspruchung auf die Glasur aufgetragen oder eingebrannt (sogenannte Schmelz- oder Aufglasurpigmente) oder auf den Scherben aufgetragen und anschließend mit einer Glasur überzogen (Unterglasurpigmente) Zur Herstellung nicht glasierter Keramik wird die sogenannte Engobetechnik angewandt, bei der eine feine Aufschlämmung von mit den Pigmenten vermischten Tonmineralien in dünner Schicht auf das keramische Material aufgebracht und eingebrannt wird. Eine Durchfärbung des gesamten Keramikmaterials verbietet sich normalerweise wegen des hohen Preises der Pigmente. Das Engobenverfahren hat den großen Vorteil, dass nicht nur eine dünne oberflächliche Farbgebung erfolgt, sondern dass das Keramikmaterial mit einer durchgefärbten Oberflächenschicht versehen ist, so dass man Rauhigkeiten und Unebenheiten der Oberfläche durch Abschleifen und Polieren egalisieren kann, ohne dass die Färbung mitentfernt wird. Nachteilig bei diesem Verfahren ist, dass immer nur die gesamte Oberfläche mit der farbigen Schicht überzogen wird und man somit keine Muster aufbringen kann.

Zum Aufbringen von Farbmustern auf nicht glasierte Keramik hat man daher schon seit längerer Zeit versucht, Lösungen von farbgebenden Metallverbindungen nachträglich auf die gebrannte Keramikoberfläche aufzubringen, damit diese in die Oberfläche eindringen und nach dem Trocknen und Brennen eine Oberflächenschicht ergeben, die mit den sich bildenden farbigen Metalloxiden durchsetzt ist. Zur Rosafärbung vergleiche DE-OS 195 46 325, zur Schwarzfärbung DE-OS 196 25 236. Obwohl die Färbemöglichkeiten nach dieser' Verfahrensvariante relativ groß sind und sich eine größere Anzahl von Farben herstellen lässt, ist durch die Beschränkung auf oxidische Farben die Farbpalette beschränkt. Färbungen mit Mischoxidpigmenten vom Typ der Rutil- oder Spinellfarben lassen sich nämlich auf diese Art und Weise nicht herstellen, da die verschiedenen Ausgangsmineralien in ausreichender Konzentration sich nicht in einheitlichen Lösungen beständig nebeneinander auflösen ließen und Suspensionen von fertigen Pigmenten nicht tief genug in die Keramikoberfläche eindringen.

Gemäß der DE 31 09 927 werden Salze oder Oxide verschiedener farbgebender Metalle als solche im Druckverfahren auf die Keramik aufgetragen und erzeugen jedes für sich die entsprechende Farbe. Ein gemeinsames Auftragen wird zwar ebenfalls angesprochen, jedoch letztlich im Sinne von Mischfarbbildungen bzw. einem Nebeneinanderauftragen, um entsprechende farbige Bilder zu erzeugen. Beispiel 2 beschreibt das Auftragen auf eine Zirkonoxidglasurschicht, jedoch können sich die Rutilpigmente dabei nicht bilden, da einerseits jeweils nur ein Metallion (Kupfer bzw. Kobalt) aufgebracht wird, welches zur Mischphasenausbildung nicht ausreicht, und andererseits bei Zirkonoxidglasuren das ZrO₂ nicht in definierten Kristallen mit Rutilstruktur, sondern als unterkühlte glasartige Schmelze in Mischung mit den anderen Glasurbestandteilen enthalten ist.

In der WO 97/38952 werden Zusammensetzungen zum Färben von Keramik offenbart, die aus Chrom, - Antimon, - Zink, - Zirkonium und Mangan Salzen bestehen, vor allen als Mono und Polycarboxylate, die 1 bis 18 °C Atome enthalten und 1 bis 5 Substituenten tragen können in der aliphatischen Kette der entsprechenden Säure in Form ihrer wässrigen oder wässrig-alkoholischen Lösung. Diese Substituenten können Hydroxyl, Amino oder Mercapto Gruppen sein. Die resultierende Farbe ist hier hauptsächlich gelb bis braun. Als bevorzugte Kombination werden Antimon, - und Chrom Salze verwendet in einer Konzentration von 30 bis 600 g/m², die einer Menge an reinem Antimon - Metall von 1 bis 90/*m*^{*2*} *und an Chrom von 0,1 bis 30 g*/m² entspricht: Es ist wesentlich bei dieser Erfindung, dass die Keramikmasse TiO₂ in Mengen zwischen 0, 5 bis 10 Gew. %, bezogen auf die Trockenmasse, enthält. Die Kombination von färbenden Salzen und TiO₂ ist die Voraussetzung für die Bildung eines farbigen Mischphasenpigments, das die gefärbte Schicht der Keramikmasse darstellt. Es ist ein wichtiges Ziel dieser Erfindung auf Metallsalze zu verzichten, die Anionen enthalten, die bei beim Brennen sich zersetzen und dabei korrosive Gase wie Chlor, Schwefeldioxid oder Stickoxyde bilden.
Dieses Verfahren erfordert jedoch die Anwesenheit von festem TiO₂,, denn nur dann kann sich die farbige Oberflächenschicht ausbilden. Diese farbige Oberflächenschicht ist nämlich ein Mischphasenpigment, in dem einige Titankationen durch Fremdkationen entsprechender Wertigkeit ersetzt worden sind.

Es stellte sich daher die Aufgabe, ein neues Verfahren zu finden, mit dem sich oxidische Mischphasenpigmente in einer Keramikoberfläche herstellen lassen, wobei das Verfahren auch ein partielles Einfärben der Oberfläche erlaubt.

Die Lösung dieser Aufgabe wird durch die im Hauptanspruch wiedergegebenen Merkmale gelöst und durch die Merkmale der Unteransprüche gefördert.

Das erfindungsgemäße Verfahren zum Färben von Keramikoberflächen ist dadurch gekennzeichnet, dass in der Oberflächenschicht der Keramikmasse ein Mischphasenpigment erzeugt wird aus einem im Spinell oder Rutilgitter kristallisierenden Metalloxid als Wirtsgitter und einer wässrigen Färbelösung, welche eine lösliche Verbindung eines das Wirtsgitter färbenden 2 oder 3 wertigen Metallions und eine lösliche Verbindung eines 5 oder 6 wertigen Metallions zum elektrostatischen Ausgleich enthält, in dem man eine wässrige Färbelösung, mit einer zur Bildung der Wirtsgitter ausreichenden Menge einer löslichen Verbindung der das Wirtsgitter bildenden Metallionen versetzt und diese Mischung auf die Oberfläche aufträgt und nach Trocknen des Lösungsmittels der Keramikkörper bei 1000 bis 1400 °C, bevorzugt 1140 °C und einer Brenndauer von 0.5 bis 5 Stunden gebrannt wird.

Das Verfahren ist weiterhin dadurch gekennzeichnet, dass das Wirtsgitter ein Rutilgitter aus TiO₂, SnO₂, ZrO₂ oder ZrSiO₄ ist und das Wirtsgitter durch ein oder mehrfaches Tränken mit einer löslichen Verbindung, die die Wirtsgitter bildenden Metallionen enthält, behandelt und danach getrocknet wird. Dabei enthält die Färbelösung 1 bis 10 Gew. % , vorzugsweise 5 bis 8 Gew. % der jeweiligen Metallverbindungen.
Als zu färbende Verbindungen werden solche aus den Gruppen Ni, Co und Cr, sowie Sb, Nb und W ausgewählt. Die Färbelösung enthält zusätzlich Mineralisatoren und zusätzlich ein komplezgebundenes Titan, insbesondere Kaliumtitanoxalat und /oder 1-3 % der drei und fünfrvertigen Ionen und 3- 8 % Dihydroxybis (ammoniumlactato) titanat.

Nach dem erfindungsgemäßen Verfahren ist es möglich, Lösungen von Stoffen, die beim Brennen die Oxide mit Rutil- oder Spinellgitter ergeben, in die Keramik einzubringen, das Lösemittel zu verdampfen und durch Brennen auf den inneren Oberflächen die Oxidwirtsgitter abzulagern. Soweit die Ausgangsstoffe schlecht löslich sind, lässt sich durch mehrfaches Aufbringen der Lösung und Trocknen eine genügende Konzentration der Oxide erreichen. Vorzugsweise werden Lösungen von Salzen der betreffenden Metallionen mit anorganischen und organischen Säuren, oder auch Komplexverbindungen oder Chelate eingesetzt. Chloride, Sulfate, Nitrate, Acetate, Oxalate oder Komplexe mit Alkanolaminen, wie Di- oder Triethanolamin, Hydroxycarbonsäuren, beispielsweise Citronensäure oder Milchsäure, und Aminocarbonsäuren, beispielsweise EDTA oder NTA, seien als bevorzugte Verbindungen genannt. Soweit die Verbindungen in Wasser beständig sind, werden wässrige Lösungen bevorzugt. Metallorganische Verbindungen wie Titan-, Zinn- oder Zirkonalkoxide oder -phenolate oder Metallocene, wie Titancyclopentadienylkomplexe, lassen sich nur in organischen Lösungsmitteln handhaben und sind daher für technische Färbungen weniger geeignet.

Vorzugsweise wird die Färbelösung auf die getrocknete *Keramik*schicht oder auf die das Oxidwirtsgitter enthaltende Keramik aufgetragen, erneut getrocknet und anschließend bei Temperaturen von 1000 bis 1400°C, vorzugsweise bei der üblichen Brenntemperatur von 1140°C, gebrannt. Alternativ ist es natürlich auch möglich, zunächst die Engobenschicht einzubrennen und nach Einfärbung mit den Färbelösungen nochmals nachzubrennen, um die Pigmentfärbung zu erzeugen.

Die Färbelösungen zur Herstellung von Pigmenten des Rutiltyps bestehen aus einer in Wasser löslichen Verbindung eines zwei- oder dreiwertigen Metallions, insbesondere aus der Gruppe Nickel, Cobalt und Chrom, sowie einer weiteren löslichen Verbindung eines fünf- oder sechswertigen Metallions, insbesondere Antimon, Niob oder Wolfram, wobei die Salze in einer Konzentration von etwa 1 bis 10 Gew.-%, vorzugsweise 2 bis 5 Gew.-%, enthalten sind. Als Anionen werden vorzugsweise organische Säuren und insbesondere komplexbildende Säuren verwendet, die einerseits sehr gute Lösungseigenschaften besitzen und andererseits beim Brennen unter Bildung von Wasser und CO₂ umweltschonend verbrennen. Anorganische Anionen wie Chlorid oder Nitrat können jedoch ebenfalls verwendet werden, soweit man die damit verbundenen Nachteile in Kauf nehmen will.

Weiterhin hat sich herausgestellt, dass ein Zusatz von Kaliumnitrat, Natriumfluorid oder ähnlichen Substanzen, welche als Mineralisatoren wirken, die Bildung der Mischphasenpigmente auch in der Tonmatrix fördern.

Weiterhin hat es sich als vorteilhaft herausgestellt, der Lösung noch komplexgebundenes Titan, insbesondere Kalium-Titan-Oxalat, zuzusetzen, wobei allerdings die Mengen durch die geringe Löslichkeit dieser Verbindung auf unter 3 % beschränkt sind. Die Mischphasenfärbung wird durch diesen Zusatz verstärkt, möglicherweise dadurch, dass das Aufwachsen einer Mischphase auf die vorhandenen Wirtsgitter gefördert wird.

Neuerdings ist bekannt geworden, dass durch Milchsäure chelatisiertes Titan (Dihydroxy-bis[2-hydroxypropanato(2⁻)-O¹,O²]-titanat(2⁻)) als Ammoniumsalz (CAS-Reg.Nr. Nr. 85104-06-5 ) in bis zu 50 Gew.-%, entsprechend einem Titangehalt von 8,2 Gew.-%, in wässriger Lösung hydrolysestabil ist und als Katalysator zur Vernetzung von Kunststoffen oder als Haftvermittler verwendet werden kann.

Entsprechende Stabilitäten weisen auch die Na- und K-Verbindungen sowie Verbindungen mit anderen Ammoniumionen auf. Überraschenderweise lassen sich diese Verbindungen mit Salzen drei- und fünfwertiger Ionen, wie sie für die Mischphasenbildung von Rutilgitter gebräuchlich sind in Konzentrationen mischen, die für eine direkte Färbung von' Keramikoberflächen ausreichen, ohne dass die Wechselwirkung der verschiedenen Anionen zu einer Unverträglichkeit führt. Als Anionen in diesen Salzen sind organische Säurereste, wie Acetat, Tartrat, Citrat oder Lactat bevorzugt, da sie beim Brennen zu CO₂ oxidiert werden. Anorganische Salze wie Chloride, Sulfate oder Nitrate lassen sich jedoch ebenfalls einsetzen. 1-3 Gew.-% der drei- und fünfwertigen Ionen und 3-8 Gew.-% des Titans werden dabei bevorzugt. Geringere Mengen der drei- bis fürifwertigen Ionen führen zu blassen Farben, geringere Mengen Titan oder höhere Mengen der färbenden Verbindungen führen zu oxidischen Mischfarben, die nicht die Brillanz und den Farbton der Rutilgitter aufweisen. Bevorzugt wird insoweit die Bildung eines Rutilpigments mit 10-60 %, vorzugsweise 20-40 %, der farbgebenden Ionen.

Die Färbelösungen werden durch Sprühen, Tauchen, Malen, Drucken usw. nur auf die Teile der Oberfläche aufgetragen die eingefärbt werden sollen, wobei die Lösungen je nach aufgetragener Menge mehr oder weniger tief in die Keramikmasse eindringen. Verfärbungen treten so üblicherweise bis zu einer Tiefe von 0,5 bis 2 mm ein, so dass sowohl eine Musterung der Oberfläche als auch eine Bearbeitung beispielsweise durch Schleifen oder Polieren möglich ist.

Durch das Brennen werden die organischen Liganden der Metallverbindung verbrannt bzw. anorganische Anionen verdampft und die zurückbleibenden Metalloxide in die silikatische Phase der Keramik oder unter Bildung von farbigen Pigmenten in die vorgegebenen Wirtsgitter eingebaut.

Die erfindungsgemäß gebildeten Mischphasenpigmente erlauben es, das Spektrum der nachträglichen Färbungen von Keramikoberflächen außerordentlich zu erweitern und eine Vielzahl neuer Farbtöne gezielt aufzubringen.

Die folgenden Versuche verdeutlichen am Beispiel der Herstellung von Rutilpigmenten den Erfindungsgegenstand näher, ohne diesen zu beschränken.

### I. Farbmessungen:

Der erhaltene Farbton wurde mit einem Minolta-Chroma-Meter CR 200 ermittelt, wobei die CIE-Normlichtart C (6774K) verwendet wurde. Bei der Ermittlung der Werte wurde das in ISO- und DIN-Normen empfohlene L*a*b*-Farbsystem verwendet. Das L*a*b*-Farbsystem stellt einen Farbkörper dar, durch den drei Achsen gelegt wurden. Die senkrechte Achse ist die L*-Achse und steht für die Helligkeit der Farbe. Die Achsen a* und b* sind in der horizontalen Ebene (Farbkreis) untergebracht, wobei a* für den Farbton und b* für die Sättigung steht.
Ein typisches Zitronengelb hat beispielsweise die Helligkeit L* 81,5; einen a*-Wert um 0 und einen hohen b* Wert von 62,5

### II. Resultate der Brennversuche

### Versuche mit Lösungen auf der Basis der Elemente Ti, Sb und Cr

Lösungen, die Antimonat und Chrom(III)-acetat enthielten, zeigten einen gelblichen Farbton, der sich beim Vorhandensein von Titan deutlich nach Gelb verschob. Der Zusatz von Oxidationsmitteln (KNO₃ bzw. K₂S₂O₈) zur Verbesserung der Farbtiefe ergab geringe Farbvertiefungen in antimonhaltigen Formulierungen (Ti-Sb-Cr sowie Ti-Sb-Ni, das letztere zeigte einen Braunton )

Im System Ti-Sb-Cr wurde nun der Einfluss von Mineralisatoren wie NaF und Oxidationsmitteln wie KNO₃ untersucht. Dabei zeigte sich, dass die Farbe zwar schwach ausgeprägt, gegen den Blindwert jedoch deutlich vorhanden ist und am besten bei einer Formulierung mit allen Komponenten (Ti-Sb-Cr, NaF, KNO₃) herauskam. Cr und Sb sind beide notwendig, der Effekt des Ti war nur schwach aus-geprägt, ebenso wie der von NaF und KNO₃. Dies wurde auch bestätigt durch eine Variation der NaF und KNO₃-Menge sowie der zusätzlichen Einformulierung von Pr (über Pr₂(CO₃)₃ und Citronensäure): in keinem Fall wurde ein deutlicher Effekt erhalten.

Die folgenden ausgewählten Rezepturen sind bevorzugte Ausführungsformen der vorliegenden Erfindung:

### III. Ausgewählte Rezeuturen :

**Versuch 3 :** 21,27 % K-**Ti**-oxidoxalat x 2 H₂O (2,9 % Ti); 8,05 % **Cr**(III)acetat (1,64% Cr); 5,50 % K-**Sb**-tartrat (2,00 % Sb); 2 % Na-gluconat; 63,2 % dest. Wasser
**Versuch 4** : 8,05 % **Cr**(III)acetat (1,64 % Cr); 5,5 % K-**Sb**-tartrat (2 % Sb); 2,2 % Na-gluconat; 84,25 % dest. Wasser
**Versuch 18** : 8,05 % **Cr**(III)acetat (1,64 % Cr); 5,5 % K-**Sb**-tartrat (2 % Sb); 21,27 % K-**Ti**-oxalat (2,87 % Ti); 3% **KNO**_{**3**}
**Versuch 19** : 8,05 % **Cr**(III)acetat (1,64 % Cr); 5,5 % K-**Sb**-tartrat (2 % Sb); 21,27 % K-**Ti**-oxalat (2,87 % Ti); 3 % **(NH**_{**4**}**)**_{**2**}**S**_{**2**}**O**_{**8**}
**Versuch 20** : 8,05 % **Cr**(III)acetat (1,64 % Cr); 5,5 % K-**Sb**-tartrat (2 % Sb);3 % **KNO**_{**3**}

**Versuch 21** : 8,05 % **Cr**(III)acetat (1,64 % Cr); 5,5 % K-**Sb**-tartrat (2 % Sb); 3 % **(NH**_{**4**}**)**_{**2**}**S**_{**2**}**O**_{**8**}
**Versuch 37** : 8,05 % **Cr**(III)acetat (1,64% Cr); 5,5 % K-**Sb**-tartrat (2 % Sb); 1 % **NaF;** 4,5 % **KNO**_{**3**}
**Versuch 39 :** 8,05 % **Cr**(III)acetat (1,64% Cr); 5,5 % K-**Sb**-tartrat (2 % Sb); 21,27 % K-**Ti**-oxalat ; 2 % **Pr**_{**2**}**(CO**_{**3**}**)**_{**3**}

**Tabelle 1**

| **Farbwerte nach dem L*a*b*-System** | | | |
|---|---|---|---|
| Lösung Nr | L* | a* | b* |
| Blindwert | 74 | -2,1 | +18 |
| 3 | 73,5 | -2,5 | +22 |
| 4 | 71,6 | -3,8 | +22,5 |
| 18 | 72 | -3,2 | +23,7 |
| 19 | 71,5 | -3,2 | +23,5 |
| 20 | 71,4 | -4,1 | +23 |
| 21 | 72 | -4 | +23 |

| Lösung Nr | L* | a* | b* |
|---|---|---|---|
| Blindwert | 86 | -3,5 | +16 |
| 37 | 72 | -2,4 | +27,5 |
| 39 | 77 | -3 | +26 |

Die oben beschriebenen Formulierungen wurden neben der üblichen Brenntemperatur von 1140°C auch bei 1000°C gebrannt, wobei kein Farbeindruck erhalten wurde.

### IV. Färben mit einer Ti/Cr/Sb-Lösung (erfindungsgemäß)

Keramische Scherben mit einem TiO₂-Gehalt von < 0,1 Gew.-% und ansonsten dem Versuch VI entsprechender Zusammensetzung werden mit den folgenden Lösungen besprüht, getrocknet und bei 1140 °C gebrannt.

| | | |
|---|---|---|
| 38. | 2 % Cr | (als Chrom(III)acetat) |
| | 1,4 % Sb | (als Kaliumantimon(III) artrat) |
| | 8,8 % Ti | (als Dihydroxybis(ammoniumlactato)titanat -40 % in H₂O) |
| | Rest | Wasser |
| | | |
| 39. | 1,5 % Cr | (als Chrom(III)acetat) |
| | 1,0 % Sb | (als Kaliumantimon(III)tartrat) |
| | 4,0 % Ti | (als Dihydroxybis(ammoniumlactato)titanat - 40 % in H₂O) |
| | Rest | Wasser |
| | | |
| 40. | 2 % Cr | (als Chrom(III)acetat) |
| | 1,4 % Sb | (als Kaliumantimon(III)tartrat) |
| | 2,5 % Ti | (als Titanoxalat) |
| | Rest | Wasser |
| | | |
| 41. | 2 % Cr | (als Chrom(III)acetat) |
| | 1,4 % Sb | (als Kaliumantimon (III) tartrat) |
| | Rest | Wasser |
| | | |
| 42. | 2 % Cr | (als Chrom(III)acetat) |
| | 4,0 % Ti | (als Dihydroxybis(ammoniumlactato)titanat - 40 % in H₂O) |
| | Rest | Wasser |

**Tabelle 7**

| Versuch | L* | a* | b* |
|---|---|---|---|
| Blindwert | 80,2 | 0,85 | 7.9 |
| 38 | 75,95 | 1,65 | 25,4 |
| 39 | 75,5 | 0,9 | 27,9 |
| 40 | 74,4 | 2,5 | 21,3 |
| 41 | 73,8 | 1,9 | 19,5 |
| 42 | 72,5 | -4,5 | 20,3 |

Lediglich die das ternäre Gemisch enthaltenden Lösungen ergeben eine satte Gelbfärbung durch das gebildete Rutilmischphasengitter. Die Lösung ohne Titanat ergibt einen schmutzigen orange Farbton, die Lösung ohne Antimon eine blasse gelbgrüne Färbung.

## Patentansprüche

1. Verfahren zum Färben von Keramikoberflächen , **dadurch gekennzeichnet, daß** in der Oberflächenschicht der Keramikmasse ein Mischphasenpigment erzeugt wird aus einem im Spinell oder Rutilgitter kristallisierenden Metalloxid als Wirtsgitter und einer wäßrigen Färbelösung, welche eine lösliche Verbindung eines das Wirtsgitter färbenden 2 oder 3 wertigen Metallions und eine lösliche Verbindung eines 5 oder 6 wertigen Metallions zum elektrostatischen Ausgleich enthält, in dem man eine wäßrige Färbelösung, mit einer zur Bildung der Wirtsgitter ausreichenden Menge einer löslichen Verbindung der das Wirtsgitter bildenden Metallionen versetzt und diese Mischung auf die Oberfläche aufträgt und nach Trocknen des Lösungsmittels der Keramikkörper bei 1000 bis 1400 °C, bevorzugt 1140 °C und einer Brenndauer von 0,5 bis 5 Stunden gebrannt wird.

2. Verfahren gemäß Anspruch 2, **dadurch gekennzeichnet, daß** das Wirtsgitter ein Rutilgitter aus TiO₂, SnO₂, ZrO₂ oder ZrSiO₄ ist.

3. Verfahren gemäß einem der Ansprüche 1 bis 2, **dadurch gekennzeichnet, daß** das Wirtsgitter durch ein oder mehrfaches Tränken mit einer löslichen Verbindung, die die Wirtsgitter bildenden Metallionen enthält, behandelt und danach getrocknet wird.

4. Verfahren nach einem der Ansprüche 1 bis 3, **dadurch gekennzeichnet, daß** die Färbelösung 1 bis 10 Gew. % , vorzugsweise 5 bis 8 Gew. % der jeweiligen Metallverbindungen enthält.

5. Verfahren gemäß einem der Ansprüche 1 bis 4, **dadurch gekennzeichnet, daß** die färbenden Verbindungen aus den Gruppen Ni, Co und Cr, sowie Sb, Nb und W ausgewählt werden.

6. Verfahren nach einem der Ansprüche 1 bis 5, **dadurch gekennzeichnet, daß** die Färbelösung zusätzlich Mineralisatoren enthält.

7. Verfahren nach einem der Ansprüche 1 bis 6, **dadurch gekennzeichnet, daß** die Färbelösung zusätzlich ein komplexgebundenes Titan, insbesondere Kaliumtitanoxalat enthält.

8. Verfahren nach einem der Ansprüche 1 bis 7, **dadurch gekennzeichnet, daß** die Tränklösung zur Bildung des Mischphasenpigments je 1-3 % der drei und fünfwertigen Ionen und 3- 8 % Dihydroxybis(ammoniumlactato)titanat enthält.

## Claims

1. Method for colouring ceramic surfaces, **characterised in that** a mixed phase pigment is created in the surface layer of the ceramic mass, comprising as the host lattice a metal oxide crystallising in a spinel or rutile lattice and an aqueous dye solution containing a soluble compound of a divalent or trivalent metal ion colouring the host lattice and a soluble compound of a pentavalent or hexavalent metal ion for electrostatic balance, **in that** an aqueous dye solution is mixed with a sufficient quantity of a soluble compound of the metal ions forming the host lattice to form the host lattice and this mixture is applied to the surface and, following drying of the solvent, the ceramic body is fired at 1000° to 1400°C, preferably 1140°C for a firing duration of between 0.5 hours and 5 hours.

2. Method according to Claim 2¹, **characterised in that** the host lattice is a rutile lattice made of TiO₂, SnO₂, ZrO₂ or ZrSiO₄.

3. Method according to one of the claims 1 or 2, **characterised in that** the host lattice is treated by single or multiple steeping in a soluble compound containing the metal ions forming the host lattice, and is subsequently dried.

4. Method according to one of the claims 1 to 3, **characterised in that** the dye solution contains between 1 % and 10 % by weight, preferably between 5 % and 8 %, of the respective metal compounds.

5. Method according to one of the claims 1 to 4, **characterised in that** the colouring compounds are selected from the groups Ni, Co and Cr, and Sb, Nb and W.

6. Method according to one of the claims 1 to 5, **characterised in that** the dye solution additionally contains mineralisers.

7. Method according to one of the claims 1 to 6, **characterised in that** the dye solution also contains complex-bound titanium, particularly potassium titanium oxalate.

8. Method according to one of the claims 1 to 7, **characterised in that** the steeping solution for forming the mixed phase pigment contains between 1 % and 3 % of the trivalent and pentavalent ions and between 3 % and 8 % titanium dihydroxy bis(ammonium lactate).

## Revendications

1. Procédé de teinture de surfaces céramiques, caractérisé en que dans la couche de surface de la masse céramique est généré un pigment de phase mixte à partir d'un oxyde métallique se cristallisant en tant que structure hôte dans la structure spinelle ou rutile et d'une solution colorante aqueuse contenant un composé soluble d'un ion métallique de valence 2 ou 3 colorant la structure hôte et un composé soluble d'un ion métallique de valence 5 ou 6 pour la compensation électrostatique, où l'on mélange une solution colorante aqueuse, avec une teneur d'un composé soluble des ions métalliques formant la structure hôte suffisante pour la formation de celle-ci, applique ce mélange sur la surface, et où, après séchage du solvant des corps céramiques, l'on fait cuire le corps céramique à une température comprise entre 1000 et 1400 °C, préférentiellement 1140 °C pendant une durée de cuisson de 0,5 à 5 heures.

2. Procédé selon revendication 1, caractérisé en que la structure hôte est une structure rutile de TiO₂, SnO₂, ZrO₂ ou ZrSiO₄.

3. Procédé selon l'une des revendications 1 et 2, caractérisé en que la structure hôte est traitée par trempage simple ou renouvelé dans un composé soluble contenant les ions métalliques formant la structure hôte, avant d'être séchée.

4. Procédé selon l'une des revendications 1 à 3, caractérisé en que la solution colorante contient de 1 à 10 % en poids des composés métalliques respectifs, préférentiellement de 5 à 8 % en poids.

5. Procédé selon l'une des revendications 1 à 4, caractérisé en que les composés colorants sont sélectionnés dans les groupes Ni, Co et Cr, ou Sb, Nb et W.

6. Procédé selon l'une des revendications 1 à 5, caractérisé en que la solution colorante contient des minéralisateurs additionnels.

7. Procédé selon l'une des revendications 1 à 6, caractérisé en que la solution colorante contient un composé complexe de titane additionnel, notamment un titanoxalate de potassium.

8. Procédé selon l'une des revendications 1 à 7, caractérisé en que la solution de trempage pour la formation du pigment de phase mixte contient respectivement 1-3 % des ions de valence 3 et 5 et 3-8 % de dihydroxybis(ammoniumlactato)titanate.
